(19) Europäisches Patentamt
European Patent Office
Office européen des brevets

(11) Veröffentlichungsnummer: **0 088 047**
**B1**

# (12) EUROPÄISCHE PATENTSCHRIFT

(45) Veröffentlichungstag der Patentschrift: **12.03.86**

(51) Int. Cl.⁴: **C 07 C 125/08**, C 08 G 59/44

(21) Anmeldenummer: **83810070.9**

(22) Anmeldetag: **17.02.83**

(54) **N-Cyancarbonsäureamide, Verfahren zu deren Herstellung und deren Verwendung.**

(30) Priorität: **23.02.82 CH 1107/82**

(43) Veröffentlichungstag der Anmeldung: **07.09.83 Patentblatt 83/36**

(45) Bekanntmachung des Hinweises auf die Patenterteilung: **12.03.86 Patentblatt 86/11**

(84) Benannte Vertragsstaaten: **CH DE FR GB LI**

(56) Entgegenhaltungen:
**DE - A - 2 022 492**
**US - A - 3 564 607**

(73) Patentinhaber: **CIBA-GEIGY AG, Klybeckstrasse 141, CH-4002 Basel (CH)**

(72) Erfinder: **Stockinger, Friedrich, Stutzrain 4, CH-4434 Hölstein (CH)**
Erfinder: **Lohse, Friedrich, Prof. Dr., Buchenstrasse 23, CH-4104 Oberwil (CH)**
Erfinder: **Moser, Roland, Säckingerstrasse 10, CH-4058 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft N-Cyancarbonsäureamidderivate, welche zwei- oder dreimal die Gruppierung -N-CO- im Molekül enthalten, Verfahren zu deren
|
CN
Herstellung und die Verwendung der erfindungsgemässen Verbindungen als Härtungsmittel für Epoxidharze.

In der DE-A-2 022 492 wird offenbart, dass man durch Umsetzung von N,N'-Dicyandicarbonsäureamiden mit diprimären Diaminen lineare Polyadditionsprodukte erhält, die thermoplastisch sind und zu Filmen oder Klebstoffen verarbeitet oder als Überzugsmassen eingesetzt werden können.

Die Verwendung von Dicyandiamid als Härtungsmittel für Epoxidharze ist seit langem bekannt. Härtbare, aus Epoxidharz, Dicyandiamid und gegebenenfalls einem Härtungsbeschleuniger bestehende Mischungen weisen eine gewisse Lagerfähigkeit auf, die im wesentlichen darauf beruht, dass das Dicyandiamid und gegebenenfalls der Beschleuniger im Epoxidharz schwer löslich sind und somit im Epoxidharz dispergiert vorliegen. Der Nachteil solcher Mischungen besteht nun darin, dass während der Lagerung oder Verarbeitung solcher Mischungen Sedimentation der ungelösten Härterteilchen eintreten kann und somit inhomogen gehärtete Produkte mit weniger guten mechanischen Eigenschaften erhalten werden.

Es wurde nun gefunden, dass sich die oben genannten Nachteile vermeiden lassen, wenn man als Härtungsmittel für Epoxidharze die erfindungsgemässen Verbindungen einsetzt. Die erfindungsgemässen N-Cyancarbonsäureamidderivate weisen den Vorteil auf, dass sie im Epoxidharz gut löslich sind, ohne dass sich die Lagerstabilität der härtbaren Epoxidharzmischungen verschlechtert.

Gegenstand der vorliegenden Erfindung sind somit N-Cyancarbonsäureamidderivate, welche die Gruppierung -N-CO- zwei- oder dreimal im Molekül enthal-
|
CN
ten, der Formeln I bis III

```
      CN     CN
      |      |
R1-CO-N - R2-N - CO-R1          (I),

   CN          CN
   |           |
R3-N - CO-R4-CO-N - R3          (II)

          CN
          |
oder R5—(CO-N - R3)3            (III),
```

worin $R_1$ ein unsubstituiertes oder substituiertes Alkyl mit 1 bis 8 C-Atomen, Cycloalkyl mit 5 bis 8 C-Atomen oder unsubstituiertes oder substituiertes Aryl mit 6 oder 10 Ring-C-Atomen, $R_2$ ein gegebenenfalls durch O- oder S-Atome unterbrochenes Alkylen mit 2 bis 12 C-Atomen, Buten-(2)-ylen, Butin-(2)-ylen, Phenylendimethylen oder einen Rest der Formel 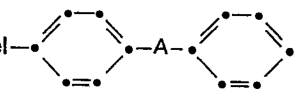, worin -A- für $-CH_2-$, $-SO_2-$ oder -O- steht, $R_3$ ein unsubstituiertes oder substituiertes Alkyl mit 1 bis 8 C-Atomen, unsubstituiertes oder substituiertes Phenyl oder Aralkyl mit bis zu 12 C-Atomen, Cycloalkyl mit 5 bis 8 C-Atomen, Allyl oder Methallyl, $R_4$ eine direkte Bindung, ein gegebenenfalls durch O- oder S-Atome unterbrochenes Alkylen mit 1 bis 12 C-Atomen, 1,3-, 1,4-Cyclohexylen, 1,3- oder 1,4-Phenylen und $R_5$ einen Rest der Formeln 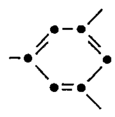 oder 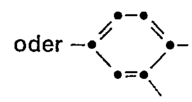 bedeuten.

Vorzugsweise bedeuten in den Formeln I bis III $R_1$ ein Alkyl mit 1 bis 4 C-Atomen, Cyclohexyl oder unsubstituiertes oder substituiertes Phenyl, $R_2$ ein Alkylen mit 2 bis 6 C-Atomen, Phenylendimethylen, oder einen Rest der Formel

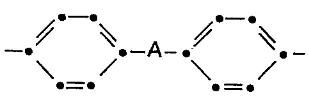, worin -A- für $-CH_2-$, $-SO_2-$ oder -O- steht, $R_3$ ein Alkyl mit 1 bis 4 C-Atomen, unsubstituiertes oder substituiertes Benzyl oder Allyl, $R_4$ ein Alkylen mit 2 bis 8 C-Atomen, 1,3-, 1,4-Cyclohexylen, 1,3- oder 1,4-Phenylen und $R_5$ einen Rest der Formel 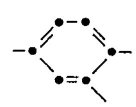 .

Besonders bevorzugte Verbindungen sind die N-Cyancarbonsäureamidderivate der Formeln I und II, worin $R_1$ ein Alkyl mit 1 bis 4 C-Atomen, Cyclohexyl oder unsubstituiertes oder substituiertes Phenyl, $R_2$ ein Alkylen mit 2 bis 6 C-Atomen, Phenylendimethylen, oder einen Rest der Formel

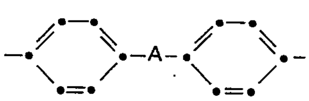, worin -A- für $-CH_2-$, $-SO_2-$ oder -O- steht, $R_3$ ein Alkyl mit 1 bis 4 C-Atomen, unsubstituiertes oder substituiertes Benzyl oder Allyl, $R_4$ ein Alkylen mit 2 bis 8 C-Atomen, 1,3-, 1,4-Cyclohexylen, 1,3- oder 1,4-Phenylen und $R_5$ einen Rest der Formel 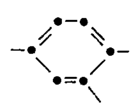 bedeuten.

Die Alkylgruppen $R_1$ und $R_3$ können geradkettig oder verzweigt, unsubstituiert oder substituiert oder auch durch Äthersauerstoffatome unterbrochen sein. Geeignete Substituenten sind beispielsweise Chlor- oder Bromatome sowie die Nitrogruppe. Die Cycloalkylgruppen $R_1$ und $R_3$ können gegebenenfalls ebenfalls mit solchen Substituenten substituiert sein. Als Beispiele solcher Alkylgruppen seien genannt: Methyl, Chlormethyl, Äthyl, 1-Chloräthyl, 2-Bromäthyl, n-Propyl, Isopropyl, 3-Brompropyl, n-Butyl, sek.-Butyl, n-Pentyl, 2-Pentyl, n-Hexyl, n-Heptyl, 3-Heptyl oder n-Octyl.

Die Arylgruppe $R_1$ kann unsubstituiert oder substituiert sein, wie z.B. durch 1 oder 2 Halogenatome, besonders Chlor oder Brom, 1 oder 2 Nitrogruppen oder durch 1 oder 2 Alkyl- oder Alkoxygruppen mit 1-4, vor allem 1 oder 2 C-Atomen. Als Beispiele solcher Arylgruppen seien genannt: Phenyl, p-Nitrophenyl, 3,5-Dinitrophenyl, p-Tolyl, o-Tolyl, 4-Chlor-1-nitrophenyl, 2-Methoxyphenyl, Naphthyl und β-Chlornaphthyl.

Stellt $R_2$ bzw. $R_4$ einen Alkylenrest dar, so kann dieser ebenfalls verzweigt bzw. durch niedere Alkylgruppen, insbesondere durch Methyl oder Äthyl, substituiert sein, wie beispielsweise 2,2,4-Trimethylhexamethylen oder Neopentylen.

Steht $R_2$ für den Rest der Formel

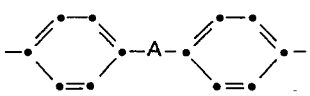

, so kann dieser gegebenenfalls am Ring ein oder mehrere Substituenten aufweisen, wie beispielsweise ein oder zwei Chlor- oder Bromatome, 1 oder 2 Alkyle mit 1 bis 4 C-Atomen oder 1 oder 2 Nitrogruppen.

Desgleichen kann die Aralkylgruppe $R_3$ am Ring ein oder mehrere Substituenten aufweisen, wie beispielsweise 1 oder 2 Chlor- oder Bromatome, 1 oder 2 Nitrogruppen oder 1 oder 2 Alkylgruppen mit 1 bis 4 C-Atomen, insbesondere Methyl oder Äthyl.

Die erfindungsgemässen N-Cyancarbonsäureamidderivate der Formeln I bis III können hergestellt werden, indem man

1 Mol eines Dicyandiamins der Formel IV

$$\overset{\displaystyle CN}{\overset{|}{HN}}\text{ - }R_2\text{ - }\overset{\displaystyle CN}{\overset{|}{NH}} \qquad (IV)$$

mit 2 Mol eines Carbonsäureanhydrids der Formel (V),

$$(R_1\text{-CO})_2O \qquad (V),$$

in einem organischen, mit Anhydridgruppen nicht reagierenden Lösungsmittel und gegebenenfalls in Gegenwart eines basischen Katalysators oder

1 Mol eines Dicyandiaminsalzes der Formel VI

$$M^{\oplus} \quad {}^{\ominus}\overset{\displaystyle CN}{\overset{|}{N}}\text{ - }R_2\text{-}\overset{\displaystyle CN}{\overset{|}{N}}{}^{\ominus} \quad M^{\oplus} \qquad (VI)$$

mit 2 Mol eines Carbonsäurehalogenids der Formel VII

$$R_1\text{-CO-X} \qquad (VII)$$

oder 1 Mol einer Dihalogenverbindung der Formel VIII

$$X\text{-}R_2\text{-}X \qquad (VIII)$$

mit 2 Mol eines N-Cyancarbonsäureamidsalzes der Formel IX

$$R_1\text{-CO-}\overset{\displaystyle CN}{\overset{|}{N}}{}^{\ominus} \quad M^{\oplus} \qquad (IX)$$

worin X für ein Chlor- oder Bromatom und $M^{\oplus}$ für ein Na- oder K-Kation stehen, in einem polaren aprotischen Lösungsmittel zu Verbindungen der Formel I umsetzt, oder indem man

1 Mol eines Carbonsäuredi- oder -trichlorids der Formel X bzw. XI

$$Cl\text{-CO-}R_4\text{-CO-Cl} \qquad (X)$$

$$R_5\text{-}(\text{CO-Cl})_3 \qquad (XI)$$

mit 2 bzw. 3 Mol eines Cyanamids der Formel XII

$$R_3\text{-}\overset{\displaystyle CN}{\overset{|}{NH}} \qquad (XII)$$

in Gegenwart von 2 bzw. 3 Mol Natron- oder Kalilauge, oder

1 Mol eines Carbonsäuredicyandiamid- oder -tricyantriamidsalzes der Formel XIII bzw. XIV

$$M^{\oplus} \quad {}^{\ominus}\overset{\displaystyle CN}{\overset{|}{N}}\text{ - CO-}R_4\text{-CO-}\overset{\displaystyle CN}{\overset{|}{N}}{}^{\ominus} \quad M^{\oplus} \qquad (XIII)$$

$$R_5\text{-}(\text{CO-}\overset{\displaystyle CN}{\overset{|}{N}}{}^{\ominus} \quad M^{\oplus})_3 \qquad (XIV)$$

entweder mit 2 bzw. 3 Mol eines Alkylierungsmittels der Formel XV

$$R_3\text{-}Z \qquad (XV)$$

worin $M^{\oplus}$ für ein Na- oder K-Kation und Z für ein Chlor-, Brom- oder Jodatom stehen, oder auch für den Fall, dass $R_3$ in Formel II bzw. III nur Methyl oder Äthyl bedeutet, mit 2 bzw. 3 Mol Dimethyl-, Diäthylsulfat, Alkylphosphonsäuredimethyl- oder -diäthylester als Alkylierungsmittel in einem polaren aprotischen Lösungsmittel zu Verbindungen der Formel II bzw. III umsetzt.

Die Verbindungen der Formel I werden vorzugsweise hergestellt durch Umsetzung von 1 Mol eines Dicyandiamins der Formel IV mit 2 Mol eines Carbonsäureanhydrids der Formel V oder durch Umsetzung von 1 Mol einer Dihalogenverbindung der Formel VIII mit 2 Mol eines N-Cyancarbonsäureamidsalzes der Formel IX, worin in den Formeln $R_1$ vorzugsweise ein Alkyl mit 1 bis 4 C-Atomen, Cyclohexyl oder unsubstituiertes oder substituiertes Phenyl und $R_2$ vorzugsweise ein Alkylen mit 2 bis 6 C-Atomen, Phenylendimethylen oder einen Rest der Formel

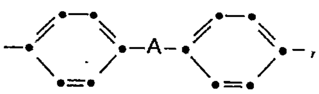, worin -A- für $-CH_2-$, $-SO_2-$ oder -O- steht, bedeuten und $M^{\oplus}$ insbesondere für ein Na-Kation steht.

Für diese Umsetzung eignen sich als organische Lösungsmittel z.B. cycloaliphatische oder aromatische Kohlenwasserstoffe, wie Cyclohexan, Benzol, Toluol und Xylole: aliphatische oder cyclische Äther, wie Diäthyläther, Dioxan und Tetrahydrofuran; chlorierte aliphatische Kohlenwasserstoffe, wie Methylenchlorid, Chloroform, Tetrachlormethan, Trichloräthylen und Dichloräthan; Äthylenglykoldimethyl- und -diäthyläther; aliphatische Ketone, wie Aceton, oder die flüssigen Carbonsäureanhydride selbst.

Die Umsetzung des Dicyandiamins der Formel IV mit dem Carbonsäureanhydrid der Formel V kann gegebenenfalls durch eine basische Verbindung katalysiert werden. Als basische Katalysatoren eignen sich beispielsweise tertiäre Amine, wie Triäthylamin oder Tributylamin, heterocyclische Basen, wie Pyridin, Chinolin, N-cyclische Basen, wie Pyridin, Chinolin, N-Methylpyrrolidin, Imidazol und deren Homologe, und die Alkalialkoholate, wie Natriummethylat.

Die Zur Herstellung der N-Cyancarbonsäureamidderivate der Formel I verwendeten Ausgangsstoffe der Formeln IV bis IX stellen bekannte Verbindungen dar.

Die Verbindungen der Formel II werden vorzugsweise hergestellt, indem man 1 Mol eines Carbonsäuredicyandiamidsalzes der Formel XIII mit 2 Mol des angegebenen Alkylierungsmittels in einem aprotischen Lösungsmittel umsetzt. Dabei verwendet man bevorzugt solche Carbonsäuredicyandiamidsalze der Formel XIII, worin $R_4$ ein Alkylen mit 2 bis 8 C-Atomen, 1,3-, 1,4-Cyclohexylen, 1,3- oder 1,4-Phenylen bedeutet und $M^{\oplus}$ für ein Na- oder K-Kation, insbesondere für ein Na-Kation steht.

Die zur Herstellung der erfindungsgemässen N-Cyancarbonsäureamidderivate der Formel II als Ausgangsstoffe verwendeten Carbonsäuredicyandiamidsalze der Formel XIII sind in der Literatur noch nicht beschrieben worden und können hergestellt werden, indem man 1 Mol eines Dicarbondiesters der Formel XVI

$$Y\text{-}O\text{-}CO\text{-}R_4\text{-}CO\text{-}O\text{-}Y \qquad (XVI)$$

worin $R_4$ die gleiche Bedeutung wie in Formel II hat und jedes Y für ein Alkyl mit 1 bis 4 C-Atomen, Benzyl oder Cyclohexyl, vorzugsweise für Methyl oder Äthyl steht, mit 2 Mol Mononatrium- oder Monokaliumcyanamid zu Verbindungen der Formel XIII umsetzt.

Die Zwischenprodukte der Formel XIII, die speziell für die Herstellung der erfindungsgemässen Verbindungen entwickelt wurden, sind neu und bilden ebenfalls einen Gegenstand der vorliegenden Erfindung.

Zur Herstellung der erfindungsgemässen Verbindungen der Formel III geht man vorzugsweise von den Carbonsäuretricyantriamidsalzen der Formel XIV aus, worin $R_5$ vorzugsweise für den Rest der Formel 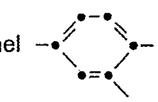 steht und $M^{\oplus}$ insbesondere ein Na-Kation bedeutet, und setzt diese mit 3 Mol des angegebenen Alkylierungsmittels in einem aprotischen Lösungsmittel um.

Die Zur Herstellung der erfindungsgemässen N-Cyancarbonsäureamidderivate der Formel III als Ausgangsstoffe verwendeten Carbonsäuretricyantriamidsalze der Formel XIV sind ebenfalls noch nicht in der Literatur beschrieben worden und können in analoger Weise wie die Carbonsäuredicyandiamidsalze der Formel XIII hergestellt werden, indem man 1 Mol eines Tricarbontriesters der Formel XVII

$$R_5\text{-}(CO\text{-}O\text{-}Y)_3 \qquad (XVII),$$

worin $R_5$ die gleiche Bedeutung wie in Formel III und Y die gleiche Bedeutung wie in Formel XVI haben, mit 3 Mol Mononatrium- oder Monokaliumcyanamid zu Verbindungen der Formel XIV umsetzt. Die neuen Zwischenprodukte der Formel XIV, die speziell für die Herstellung der erfindungsgemässen Verbindungen der Formel III entwickelt wurden, bilden ebenfalls einen Gegenstand der vorliegenden Erfindung.

Die Menge des bei der Herstellung der erfindungsgemässen Verbindungen der Formeln I bis III einzusetzenden Lösungsmittels ist nicht kritisch. Im allgemeinen werden die Lösungsmittel in solchen Mengen verwendet, dass die Ausgangssubstanzen als 20- bis 50%ige Lösungen bzw. Suspensionen vorliegen.

Die Herstellung der erfindungsgemässen Verbindungen kann in einem weiten Temperaturbereich von etwa 0 bis 150°C durchgeführt werden. Die bevorzugte Umsetzungstemperatur liegt zwischen 80 und 130°C.

Wie eingangs erwähnt stellen die erfindungsgemässen N-Cyancarbonsäureamidderivate wertvolle Härtungsmittel für Epoxidharze dar.

Gegenstand der vorliegenden Erfindung ist somit auch die Verwendung der N-Cyancarbonsäureamidderivate der Formel I bis III in härtbaren Epoxidharzen, die N-Cyancarbonsäureamidderivate und gegebenenfalls Härtungsbeschleuniger enthaltenden Mischungen.

In diesen härtbaren Mischungen wird die Menge des als Härtungsmittel eingesetzten N-Cyancarbonsäureamidderivates so berechnet, dass normalerweise 0,75 bis 1,25 Äquivalente N-Cyancarbonsäureamidgruppe auf 1 Epoxidäquivalent kommen. Vorzugsweise verwendet man das N-Cyancarbonsäureamidderivat und die Epoxidharzkomponente in gleichen äquivalenten Mengen.

Für die härtbaren Mischungen sind vorzugsweise solche Epoxidharze verwendbar, welche direkt an Sauerstoff-, Stickstoff- oder Schwefelatome gebundene Gruppen der Formel XVIII

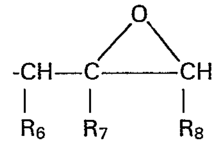

(XVIII)

enthalten, worin entweder $R_6$ und $R_8$ je ein Wasserstoffatom darstellen, in welchem Fall $R_7$ ein Wasserstoffatom oder eine Methylgruppe bedeutet, oder $R_6$ und $R_8$ zusammen $-CH_2CH_2-$ darstellen, in welchem Fall $R_7$ ein Wasserstoffatom bedeutet.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidyl- und Poly(β-methylglycidyl)-äther, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Äther lassen sich mit Epichlorhydrin aus acyclischen Alkoholen, wie Äthylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Hexan-2,4,6-triol, Glycerin, 1,1,1-Trimethylolpropan, Pentaerythrit und Sorbit, aus cycloaliphatischen Alkoholen, wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3, und aus Alkoholen mit aromatischen Kernen, wie N,N-Bis-(2-hydroxyäthyl)-anilin und p,p'-Bis-(2-hydroxyäthylamino)-diphenylmethan, herstellen. Ferner sich auch Epoxidharze aus einkernigen Phenolen, wie Resorcin und Hydrochinon, und mehrkernigen Phenolen, wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan (Bisphenol A) und 2,2-Bis-(3,5-dibrom-4-hydroxyphenyl)-propan sowie aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolacken geeignet.

Weitere geeignete Poly-(N-glycidyl)-Verbindungen umfassen beispielsweise solche, die durch Dehydrochlorierung der Umsetzungsprodukte von Epichlorhydrin mit mindestens zwei Aminowasserstoffen enthaltenden Aminen wie Anilin, n-Butylamin, Bis-(4-aminophenyl)-methan oder Bis-(4-methylaminophenyl)-methan erhalten werden, sowie Triglycidylisocyanurat oder N,N'-Diglycidylderivate von cyclischen Alkylharnstoffen, wie Äthylenharnstoff und 1,3-Propylenharnstoff, oder Hydantoinen, wie 5,5-Dimethylhydantoin.

Beispiele für Epoxidharze mit Gruppen der Formel XVIII, worin $R_6$ und $R_8$ zusammen eine $-CH_2CH_2-$Gruppe bedeuten, sind Bis-(2,3-epoxycyclopentyl)-äther, 2,3-Epoxycyclopentyl-glycidyläther und 1,2-Bis-(2,3-epoxycyclopentyloxy)-äthan.

Ebenfalls einsetzbar sind auch Epoxidharze, in denen einige oder sämtliche Epoxidgruppen mittelständig sind, wie Vinylcyclohexendioxyd, Limonendioxyd, Dicyclopentadiendioxyd, der 3,4-Epoxycyclohexylmethylester der 3',4'-Epoxycyclohexancarbonsäure sowie dessen 6,6'-Dimethylderivat, der Bis-(3,4-epoxycyclohexancarbonsäureester) des Äthylenglykols, Adipinsäure-bis-(3,4-epoxy-6-methylcyclohexylester) und 3-(3,4-Epoxycyclohexyl)-8,9-epoxy-2,4-dioxaspiro[5,5]undecan.

Die erfindungsgemässen härtbaren Mischungen können ausser den üblichen Härtungsbeschleunigern ferner noch Plastifizierungsmittel, wie Dibutylphthalat, Dioctylphthalat oder Trikresylphosphat, oder Additive enthalten, wie Füllstoffe, Verstärkungsmittel, Färbemittel, Fliessmittel, flammhemmende Stoffe und Formtrennmittel. Geeignete Streckmittel, Füllstoffe und Verstärkungsmittel sind beispielsweise Asbest, Asphalt, Bitumen, Glasfasern, Textilfasern, Kohlenstoff- oder Borfasern, Glimmer, Tonerde, Gips, Titandioxid, Kreide, Quarzmehl, Cellulose, Kaolin, gemahlener Dolomit, Wollastonit, Kieselerde mit grosser spezifischer Oberfläche (erhältlich unter dem Handelsnamen «Aerosil»), mit langkettigen Aminen modifizierte Tonerde (erhältlich unter dem Handelsnamen «Betone»), gepulvertes Poly-(vinylchlorid), Polyolefin oder Aminoplast, Metallpulver, wie Aluminium- oder Eisenpulver. Flammschutzmittel, wie Antimontrioxid, können ebenfalls den härtbaren Mischungen zugegeben werden.

Die folgenden Beispiele beschreiben die Erfindung näher. Wenn nichts anderes vermerkt ist, bedeuten Teile Gewichtsteile.

*Beispiel 1*

Adipinsäure-bis-(N-cyanamid-Natriumsalz)

In einer Glasapparatur, ausgerüstet mit Rührer, Thermometer, Tropftrichter und zwei Kühlern mit Trockenrohren, werden 126,0 g Natriummetall und 2,5 Liter Äthylalkohol zur Reaktion gebracht. Nach der vollständigen Umsetzung des Natriums wird eine Lösung von 231,2 g (5,0 Mol + 10% Überschuss) Cyanamid in 2 Liter Äthanol innerhalb von 10 Minuten bei 30°-36°C zugetropft und anschliessend 435,5 g (2,5 Mol) Adipinsäuredimethylester zugegeben. Man lässt das Gemisch bei 77°C 19 Stunden und 45 Minuten lang reagieren, kühlt dann auf Raumtemperatur ab, saugt die Suspension ab, wäscht den Rückstand mit Äthylalkohol und trocknet die Substanz bei 90°C im Vakuum.

Das Äquivalentgewicht, bestimmt durch potentiometrische Titration, beträgt 122,2 (97,4% der Theorie). Die IR-Absorption der Nitrilgruppe liegt bei 2160 $cm^{-1}$. Die erhaltene Substanz weist folgende Struktur auf:

NC O O CN
| || || |
$Na^{\oplus}$ $^{\ominus}N—C-(CH_2)_4-C—N^{\ominus}$ $Na^{\oplus}$ .

*Beispiel 2*

Adipinsäure-bis-(N-cyan-methylamid)

In einem mit Rührer, Thermometer und Kühler versehenen Glaskolben werden 476,3 g (2,0 Mol) des in Beispiel 1 hergestellten Adipinsäure-bis-(N-cyanamid-Natriumsalzes) und 851,6 g (4,0 Mol + 50% Überschuss) Methyljodid in 1,5 Liter N-Methylpyrrolidon bei 95°-98°C 6 Stunden und 15 Minuten lang zur Reaktion gebracht. Anschliessend wird das Reaktionsgemisch unter Rühren in 2 kg Eis und 1 Liter Wasser eingetragen, die entstandene Suspension abgesaugt, der Rückstand mit Wasser von 0°C gewaschen, trockengesaugt und bei Raumtemperatur und 0,13 mbar über Phosphorpentoxid getrocknet. Man erhält 380,9 g (85,6% der Theorie) eines farblosen, kristallinen Produkts, das nach Umkristallisation in einem aus Chlorbenzol und Hexan (5:1) bestehenden Gemisch bei 86,1°-87,8°C schmilzt.

| Elementaranalyse: | berechnet | gefunden |
|---|---|---|
| | 54,04% C | 54,07% C |
| | 6,35% H | 6,30% H |
| | 25,21% N | 25,49% N |

Das 100 MHz-$^1$H-NMR-Spektrum deckt sich mit folgender Struktur:

NC O O CN
| || || |
$H_3C—N-C-(CH_2)_4-C-N-CH_3$ .

*Beispiel 3*

Adipinsäure-bis-(N-cyan-äthylamid)

238,2 g (1,0 Mol) Adipinsäure-bis-(N-cyanamid-Natriumsalz) und 326,9 g (2,0 Mol + 50% Überschuss) Äthylbromid in 800 ml Dimethylformamid werden bei 78°-96°C 22 Stunden und 20 Minuten lang zur Reaktion gebracht. Anschliessend trägt man die Reaktionsmischung in 1,5 kg Eis und 500 ml Wasser ein, extrahiert mit 700 ml Chloroform, trennt die organische Phase ab und engt die Lösung am Rotationsverdampfer bei 60°C im Vakuum ein. Der Rückstand wird bei 60°C und 0,13 mbar bis zur Gewichtskonstanz getrocknet und es werden 228,3 g (91,2% der Theorie) eines braunen, viskosen Produkts erhalten, das nach einigen Tagen durchkristallisiert. Das Rohprodukt wird in einem Gemisch aus Diisopropyläther und Äthyläther (3:1) umkristallisiert, und man erhält ein farbloses, kristallines Produkt, das bei 38,7°-40,1°C schmilzt.

| Elementaranalyse: | berechnet | gefunden |
|---|---|---|
| | 57,58% C | 57,32% C |
| | 7,25% H | 6,99% H |
| | 22,39% N | 22,18% N |

Das 60 MHz-$^1$H-NMR-Spektrum stimmt mit folgender Struktur überein:

NC O O CN
| || || |
$CH_3-CH_2—N—C-(CH_2)_4-C—N-CH_2-CH_3$ .

*Beispiel 4*

Adipinsäure-bis-(N-cyan-isopropylamid)

23,8 g (0,1 Mol) Adipinsäure-bis-(N-cyanamid-Natriumsalz) und 36,9 g (0,2 Mol + 50% Überschuss) Isopropylbromid in 120 ml Dimethylformamid werden bei 90°-94°C 6 Stunden und 30 Minuten lang zur Reaktion gebracht. Nach dem Abkühlen des Reaktionsgemisches auf 10°C wird das entstandene Natriumbromid durch Filtration entfernt und die Lösung am Rotationsverdampfer bei 80°C und Vakuum eingeengt. Man erhält 26,0 g (93,4% der Theorie) eines braunen, viskosen Rohprodukts, das in Diäthyläther umkristallisiert wird und bei 65°C schmilzt.

| Elementaranalyse: | berechnet | gefunden |
|---|---|---|
| | 60,41% C | 60,33% C |
| | 7,97% H | 8,01% H |
| | 20,13% N | 19,94% N |

Die 60 MHz-$^1$H-NMR-Daten entsprechen folgender Struktur:

NC O O CN
| || || |
$(CH_3)_2CH—N—C-(CH_2)_4-C—N-CH(CH_3)_2$ .

*Beispiel 5*

Adipinsäure-bis-(N-cyan-n-butylamid)

Analog Beispiel 3 werden 23,8 g (0,1 Mol) Adipinsäure-bis-(N-cyanamid-Natriumsalz) und 55,2 g (0,2 Mol + 50% Überschuss) n-Butyljodid in 50 ml N-Mehthylpyrrolidon bei 92°-100°C 5 Stunden und 15 Minuten lang umgesetzt und aufgearbeitet. Man erhält 28,8 g (94,0% der Theorie) eines klaren, flüssigen Rückstandes, der durch Kugelrohrdestillation bei 170°C/0,3 mbar gereinigt wird.

| Elementaranalyse: | berechnet | gefunden |
|---|---|---|
| | 62,72% C | 62,77% C |
| | 8,55% H | 8,82% H |
| | 18,29% N | 18,18% N |

Das 60 MHz-$^1$H-NMR-Spektrum stimmt mit folgender Struktur überein:

NC O O CN
| || || |
$CH_3(CH_2)_3—N—C-(CH_2)_4-C—N-(CH_2)_3CH_3$ .

*Beispiel 6*

Adipinsäure-bis-(N-cyan-allylamid)

71,45 g (0,3 Mol) Adipinsäure-bis-(N-cyanamid-Natriumsalz) und 68,9 g (0,6 Mol + 50% Überschuss) Allylchlorid in 240 ml Dimethylformamid werden bei 84°-90°C 5 Stunden und 10 Minuten lang zur Reaktion gebracht und gemäss Beispiel 4 aufgearbeitet. Man erhält 77,4% (99,9% der Theorie) eines kristallinen Rohprodukts, das durch Umkristallisation in einem Gemisch aus 25 Teilen Diisopropyläther und 1 Teil Aceton gereinigt wird. Das Produkt schmilzt bei 46,7°-48,2°C.

| Elementaranalyse: | berechnet | gefunden |
|---|---|---|
| | 61,30% C | 61,39% C |
| | 6,62% H | 6,52% H |
| | 20,43% N | 20,60% N |

Das 60-MHz-$^1$H-NMR-Spektrum deckt sich mit folgender Struktur:

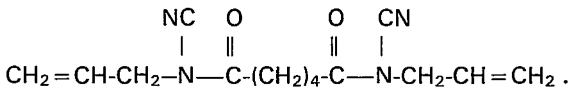

*Beispiel 7*

Adipinsäure-bis-(N-cyan-2,4-dimethylphenyl-amid)

Zu 14,6 g (0,1 Mol) N-Cyan-2,4-dimethylanilin in 60 ml 2n NaOH (0,12 Mol) werden unter Kühlung und raschem Rühren eine Lösung aus 10,07 g (0,055 Mol) Adipinsäuredichlorid in 30 ml Aceton innerhalb von 40 Minuten bei 10°-26°C zugetropft und man rührt das Reaktionsgemisch dann weitere 2 Stunden und 15 Minuten lang bei 15°-25°C. Anschliessend werden 50 ml Chloroform zugegeben, 10 Minuten lang gerührt, die beiden Phasen getrennt, die organische Phase mit wasserfreiem Natriumsulfat getrocknet, die Suspension abgesaugt und das Filtrat am Rotationsverdampfer bei 40°C im Vakuum eingeengt. Der Rückstand wird in 113 ml Essigsäureäthylester umkristallisiert und man erhält 18,7 g (93,0% der Theorie) einer farblosen, kristallinen Verbindung mit einem Schmelzpunkt von 120°-122,2°C.

| Elementaranalyse: | berechnet | gefunden |
|---|---|---|
| | 71,62% C | 71,50% C |
| | 6,51% H | 6,66% H |
| | 13,92% N | 14,08% N |

Die 100 MHz-$^1$H-NMR-Daten stimmen mit folgender Struktur überein:

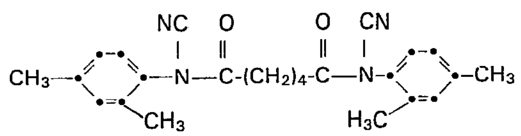

*Beispiel 8*

Glutarsäure-bis-(N-cyanamid-Natriumsalz)

160,17 g (1,0 Mol) Glutarsäuredimethylester und 140,8 g (2,0 Mol + 10% Überschuss) Mononatriumcyanamid in 500 ml n-Butanol werden bei 74° bis 114°C 5 Stunden lang zur Reaktion gebracht, wobei das gebildete Methanol fortlaufend abdestilliert wird. Nach beendeter Reaktion wird die Suspension während 3 Stunden bei 1°-3°C gerührt, abgesaugt und der Rückstand bei 110°C im Vakuum getrocknet. Man erhält 166,3 g (74,2% der Theorie) eines gelblichen, kristallinen Pulvers, das nach dem Umkristallisieren in Äthanol/Wasser (2:1) folgende Analysedaten aufweist.

| Elementaranalyse: | berechnet | gefunden |
|---|---|---|
| | 25,00% N | 24,78% N |
| | 20,52% Na | 20,75% Na |

Die IR-Absorption der Nitrilgruppe liegt bei 2160 $cm^{-1}$. Die erhaltene Substanz weist folgende Struktur auf:

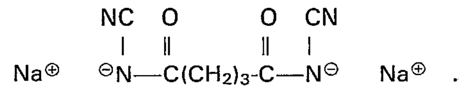

*Beispiel 9*

Glutarsäure-bis-(N-cyan-methylamid)

In eine Suspensionvon 609,6 g (2,27 Mol) Glutarsäure-bis-(N-cyanamid-Natriumsalz) in 2,2 Liter Dimethylformamid werden bei 99°-133°C innerhalb von 7 Minuten 849,4 g (5,44 Mol + 10% Überschuss) Methyljodid eingetragen und dann weitere 2 Stunden bei 105°-126°C reagieren gelassen. Man arbeitet analog Beispiel 3 auf und erhält 524,5 g (92,6% der Theorie) Rohprodukt, das in Toluol umkristallisiert wird. Die Ausbeute beträgt 320,4 g (56,6% der Theorie). Die Verbindung schmilzt bei 51,4°-52,8°C.

| Elementaranalyse: | berechnet | gefunden |
|---|---|---|
| | 51,92% C | 51,88% C |
| | 5,74% H | 5,74% H |
| | 26,91% N | 26,95% N |

Das 60 MHz-$^1$H-NMR-Spektrum deckt sich mit folgender Struktur:

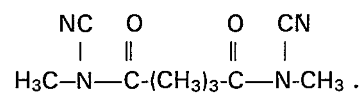

*Beispiel 10*

Glutarsäure-bis-(N-cyan-äthylamid)

246,5 g (1,1 Mol) Glutarsäure-bis-(N-cyanamid--Natriumsalz) und 900 ml Dimethylformamid werden bei ca. 90°C vorgelegt und innerhalb von 30 Minuten 411,8 g (2,2 Mol + 20% Überschuss) Äthyljodid zugetropft, wobei durch die exotherme Reaktion die Temperatur bis 112°C ansteigt. Nach weiteren 50 Minuten Reaktionsdauer bei 103°-110°C wird das Reaktionsgemisch bei 70°C im Vakuum eingeengt, der Rückstand in 300 ml Toluol bis zum Siedepunkt erhitzt, abgesaugt, der Nutschrückstand mit 200 ml Toluol wie vorher beschrieben behandelt, die beiden Filtrate vereinigt und das Lösungsmittel bei 70°C im Vakuum abdestilliert. Die Rohausbeute beträgt 206,4 g (79,5% der Theorie). Das Rohprodukt wird durch Vakuumdestillation gereinigt und man erhält 156,7 g (60,8% der Theorie) einer schwach gelblichen Flüssigkeit mit einem Siedepunkt von 143° bis 146°C/0,13 mbar.

| Elementaranalyse: | berechnet | gefunden |
|---|---|---|
| | 55,92% C | 55,67% C |
| | 6,83% H | 6,89% H |
| | 23,71% N | 23,69% N |

Das 60 MHz-$^1$H-NMR-Spektrum steht im Einklang mit folgender Struktur:

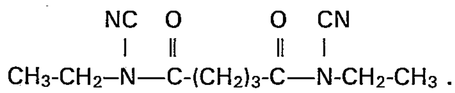

*Beispiel 11*

Glutarsäure-bis-(N-Cyan-benzylamid)

Zu einer Suspension aus 224,1 g (1,0 Mol) Glutarsäure-bis-(N-cyanamid-Natriumsalz) und 1 Liter Dimethylformamid werden bei 20°-27°C innerhalb von 40 Minuten 359,2 g (2,0 Mol + 5% Überschuss) Benzylbromid zugetropft, bei 68°-78°C 3 Stunden und 50 Minuten lang zur Reaktion gebracht und anschliessend abgesaugt. Das Filtrat wird am Rotationsverdampfer bei 100°C im Vakuum eingeengt und der Rückstand in 800 ml Toluol umkristallisiert. Man erhält 253,7 g (70,4% der Theorie) eines farblosen, kristallinen Produkts, welches bei 97,5° bis 100,4°C schmilzt.

| Elementaranalyse: | berechnet | gefunden |
|---|---|---|
| | 69,98% C | 70,07% C |
| | 5,60% H | 5,70% H |
| | 15,55% N | 15,55% N |

Das 60 MHz-$^1$H-NMR-Spektrum stimmt mit folgender Struktur überein:

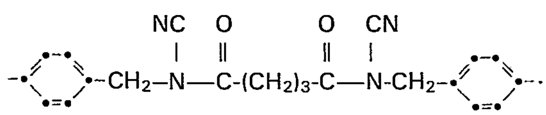

*Beispiel 12*

Glutarsäure-bis-(N-cyan-4-nitrobenzylamid)

22,4 g (0,1 Mol) Glutarsäure-bis-(N-cyanamid-Natriumsalz) und 51,85 g (0,2 Mol + 20% Überschuss) 4-Nitrobenzylbromid in 120 ml Dimethylformamid werden bei 36°-40°C 1 Stunde lang umgesetzt und analog Beispiel 2 aufgearbeitet. Es werden 44,3 g (98,4% der Theorie) eines gelblich-kristallinen Rohprodukts erhalten, das in 440 ml Essigsäureäthylester umkristallisiert wird. Man erhält 31,5 g (70,0% der Theorie) eines farblosen, kristallinen Produkts, dessen Schmelzpunkt bei 146,2°-148,2°C liegt.

| Elementaranalyse: | berechnet | gefunden |
|---|---|---|
| | 56,00% C | 55,88% C |
| | 4,03% H | 4,05% H |
| | 18,66% N | 18,52% N |

Die 60 MHz-$^1$H-NMR-Daten decken sich mit der erwarteten Struktur:

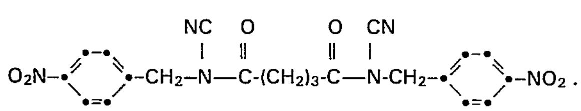

*Beispiel 13*

Bernsteinsäure-bis-(N-cyanamid-Natriumsalz)

438,4 g (3,0 Mol) Bernsteinsäuredimethylester und 422,5 g (6,0 Mol + 10% Überschuss) Mononatriumcyanamid in 3 Liter Äthylalkohol werden bei 70°-75°C 45 Stunden lang zur Reaktion gebracht und die entstandene Suspension anschliessend abgesaugt. Der Nutschrückstand wird bei 60°C im Vakuum getrocknet und man erhält 621 g (98,5% der Theorie) eines gelblichen, kristallinen Pulvers, dessen durch potentiometrische Titration ermitteltes Äquivalentgewicht 108,1 beträgt. Das erhaltene Produkt weist folgende Struktur auf:

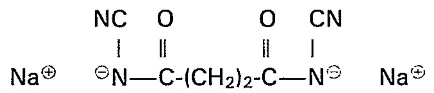

*Beispiel 14*

Bernsteinsäure-bis-(N-cyan-methylamid)

105 g (0,5 Mol) Bernsteinsäure-bis-(N-cyanamid-Natriumsalz) und 213 g (1,0 Mol + 50% Überschuss) Methyljodid in 375 ml N-Methylpyrrolidon werden analog Beispiel 2 umgesetzt und aufgearbeitet. Man erhält 68,0 g (70,0% der Theorie) einer kristallinen Verbindung, die nach der Umkristallisation in Chlorbenzol bei 112,2°-113,9°C schmilzt.

| Elementaranalyse: | berechnet | gefunden |
|---|---|---|
| | 49,48% C | 49,57% C |
| | 5,19% H | 5,14% H |
| | 28,85% N | 28,63% N |

Strukstur:

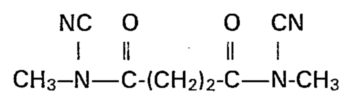

*Beispiel 15*

Sebazinsäure-bis-(N-cyanamid-Natriumsalz)

Analog Beispiel 13 werden 460,6 g (2,0 Mol) Sebazinsäuredimethylester und 281,7 g (4,0 Mol + 10% Überschuss) Mononatriumcyanamid in 2 Liter Äthylalkohol zur Reaktion gebracht und aufgearbeitet. Die Ausbeute beträgt 487,5 g (82,8% der Theorie).

| Elementaranalyse: | berechnet | gefunden |
|---|---|---|
| | 47,84% C | 47,66% C |
| | 5,62% H | 5,75% H |
| | 18,60% N | 18,27% N |
| | 2,33% $H_2O$ | 2,33% $H_2O$ |
| | 15,26% Na | 15,20% Na |

Struktur:

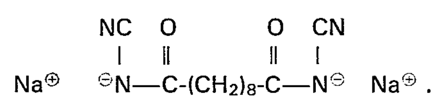

*Beispiel 16*

Sebazinsäure-bis-(N-cyan-methylamid)

441,4 g (1,5 Mol) Sebazinsäure-bis-(N-cyanamid-Natriumsalz) und 511 g (3,0 Mol + 20% Überschuss) Methyljodid in 1,5 Liter Dimethylformamid werden gemäss Beispiel 2 umgesetzt und aufgearbeitet. Die Ausbeute beträgt 370,6 g (88,8% der Theorie) und das Produkt schmilzt nach der Umkristallisation in Diisopropyläther/Essigsäureäthylester (3:1) bei 83,4°-84,0°C.

| Elementaranalyse: | berechnet | gefunden |
|---|---|---|
| | 60,41% C | 60,43% C |
| | 7,97%H | 7,78% H |
| | 20,13% N | 20,14% N |

Struktur: 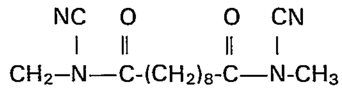

*Beispiel 17*

2-Methylglutarsäure-bis-(N-cyanamid-Natriumsalz)

Wie in Beispiel 13 beschrieben, werden 34,8 g (0,2 Mol) 2-Methylglutarsäuredimethylester und 28,2 g (0,4 Mol + 10% Überschuss) Mononatriumcyanamid in 200 ml Äthylalkohol zur Reaktion gebracht und aufgearbeitet. Man erhält 43,15 g (90,6% der Theorie) eines hellgelben, kristallinen Pulvers, dessen Äquivalentgewicht 134,1 beträgt.

Struktur:

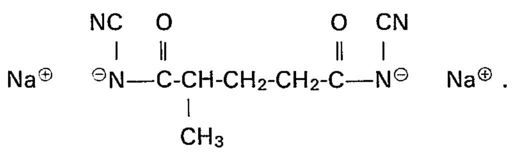

*Beispiel 18*

2-Methylglutarsäure-bis-(N-cyan-methylamid)

92,3 g (0,4 Mol) 2-Methylglutarsäure-bis-(N--cyanamid-Natriumsalz) und 124,9 g (0,8 Mol + 10% Überschuss) Methyljodid in 500 ml Dimethylformamid werden bei 100°C 2 Stunden lang zur Reaktion gebracht und analog Beispiel 3 aufgearbeitet. Es werden 80,1 g (90,1% der Theorie) eines braunen, kristallinen Rohprodukts erhalten, das durch Umkristallisation in Diäthyläther gereinigt wird. Das farblose Kristallisat schmilzt bei 59,2°-60,9°C.

| Elementaranalyse: | berechnet | gefunden |
|---|---|---|
| | 54,04% C | 54,23% C |
| | 6,35% H | 6,51% H |
| | 25,21% N | 24,86% N |

Das 60 MHz-$^1$H-NMR-Spektrum stimmt mit folgender Struktur überein:

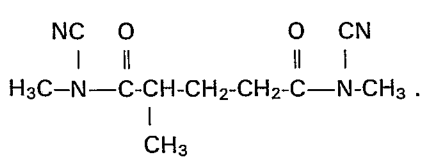

*Beispiel 19*

4,4'-Methylen-bis-(N-acetyl-phenylcyanamid)

124,1 g (0,5 Mol) 4,4'-Methylen-bis-(phenylcyanamid) und 510,5 g (1,0 Mol + 400% Überschuss) Essigsäureanhydrid werden 4 Stunden und 10 Minuten lang bei 73°-83°C zur Reaktion gebracht, anschliessend mit 465 ml Diäthyläther versetzt und gekühlt. Man saugt die Suspension ab, trocknet den Rückstand bei 50°C im Vakuum und erhält 139,6 g (84,0% der Theorie) eines kristallinen Produkts, das nach dem Umkristallisieren in Toluol bei 134° bis 136°C schmilzt.

| Elementaranalyse: | berechnet | gefunden |
|---|---|---|
| | 68,66% C | 68,62% C |
| | 4,85% H | 4,92% H |
| | 16,86% N | 16,81% N |

Struktur:

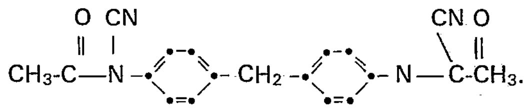

*Beispiel 20*

1,4-Bis-(N-acetyl-N-cyanaminomethyl)-benzol

212,9 g (2,0 Mol) Natriumacetylcyanamid und 175,1 g (1,0 Mol) α,α'-Dichlorxylol in 800 ml Dimethylformamid werden 5 Stunden und 20 Minuten lang bei 120°-130°C umgesetzt, nach beendeter Reaktion abgesaugt, das Filtrat mit 750 ml Diisopropyläther versetzt und 2 Stunden lang bei 0°-2°C gerührt. Man saugt die Suspension ab, trocknet den Rückstand bei 60°C und 0,13 mbar und erhält 170,8 g (63,2% der Theorie) eines kristallinen Produkts, dessen Schmelzpunkt 160°-162°C beträgt.

| Elementaranalyse: | berechnet | gefunden |
|---|---|---|
| | 62,21% C | 61,97% C |
| | 5,22% H | 5,17% H |
| | 20,73% N | 20,78% N |

Struktur: 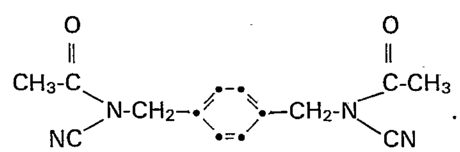

*Beispiel 21*

1,6-Bis-(N-acetyl-N-cyanamino)-hexan

106,1 g (1,0 Mol) Natriumacetylcyanamid und 77,5 g (0,5 Mol) 1,6-Dichlorhexan in 750 ml Dimethylformamid werden 8 Stunden lang bei 146° bis 147°C zur Reaktion gebracht, anschliessend abgesaugt und das Filtrat am Rotationsverdampfer bei 80°C im Vakuum eingeengt. Man erhält 125 g (99,9% der Theorie) eines Rohprodukts, das in einem Gemisch von Aceton/Diisopropyläther (3:5) umkristallisiert wird. Die Reinausbeute beträgt 58,8 g (46,9% der Theorie) und das Produkt schmilzt bei 59°-61°C.

| Elementaranalyse: | berechnet | gefunden |
|---|---|---|
| | 57,58% C | 57,40% C |
| | 7,25% H | 7,13% H |
| | 22,39% N | 22,15% N |

Struktur: 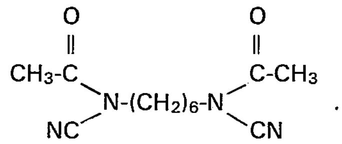

*Beispiel 22*

cis-1,4-Bis-(N-acetyl-N-cyanamino)-buten-2

25,0 g (0,2 Mol) cis-1,4-Dichlorbuten-2- und 46,7 g (0,4 Mol + 10% Überschuss) Natriumacetylcyanamid in 80 ml Dimethylacetamid werden 4 Stunden lang bei 70°-88°C umgesetzt. Anschliessend saugt man das Reaktionsprodukt ab, trägt das Filtrat in 400 g Eis ein und filtriert die entstandene Suspension ab. Der Rückstand wird bei Raumtemperatur und 0,13 mbar über Phosphorpentoxid getrocknet und es werden 29,4 g (66,7% der Theorie) der gewünschten Verbindung erhalten, welche bei 73,8°-75,2°C schmilzt.

| Elementaranalyse: | berechnet | gefunden |
|---|---|---|
| | 54,54% C | 54,74% C |
| | 5,50% H | 5,44% H |
| | 25,44% N | 25,44% N |

Das $^{13}C$-NMR-Spektrum deckt sich mit folgender Struktur:

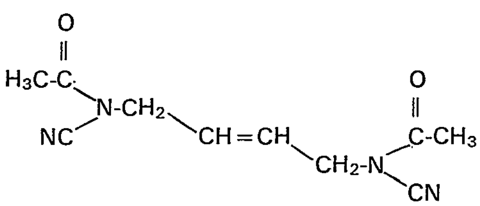

*Anwendungsbeispiele*

In den folgenden Beispielen wird die Bestimmung der Reaktivität der Harz-Härter-Mischung durch Thermoanalyse und die Bestimmung der Glasumwandlungstemperaturen wie folgt vorgenommen:

a) *Thermoanalyse:*

Zur Bestimmung der Reaktivität wird die Differential-Thermoanalyse (DTA) herangezogen. Etwa 20 mg des zu prüfenden Harz-Härtergemisches werden in einem kleinen Al-Tiegel in der Messkammer eines DTA-Gerätes (TA-2000 der Fa. METTLER-Instrumente AG, CH-Greifensee) mit einer Aufheizgeschwindigkeit von 4°C/Minute erwärmt und die Temperaturdifferenz gegenüber einem miterwärmten leeren Tiegel laufend aufgezeichnet. Aus der so erhaltenen Kurve werden als die Reaktivitäten charakterisierende Grössen die Temperaturen für den Reaktionsbeginn ($T_B$), für die maximale Reaktionsgeschwindigkeit ($T_{RG\,max}$) und für das Ende der Reaktion ($T_E$), abgelesen.

b) *Bestimmung der Glasumwandlungstemperaturen (GUT)*

4 g der Harz-Härtermischung werden jeweils in einen dünnwandigen Al-Tiegel mit etwa 5 cm Durchmesser gegossen und darin ausgehärtet. Der so erhaltenen Scheibe wird eine Probe zur Bestimmung der Glasumwandlungstemperatur des vernetzten Polymeren mit Hilfe der Differential-Thermoanalyse entnommen. Im Umwandlungspunkt ändert sich die spez. Wärme; diese Änderung wird als Wendepunkt in der vom DTA-Gerät (TA-2000 der Firma METTLER-Instrumente AG, CH-Greifensee) aufgezeichneten Kurve registriert. Die Glasumwandlungstemperatur erlaubt Rückschlüsse auf die Formbeständigkeit des erhaltenen Polymeren in der Wärme.

*Beispiel I*

100 Teile eines Epoxidharzes auf Basis von Bisphenol A mit einem Epoxidgehalt von 2,1 Äquivalent/kg und einem Erweichungsbereich von etwa 50°C und 21,8 Teile des in Beispiel 9 erhaltenen Glutarsäure-bis-(N-cyanmethylamids) (entsprechend einem Äquivalentverhältnis von N-Cyancarbonsäureamidgruppe zu Epoxidgruppe wie 1:1) werden in einer Schlagmühle homogenisiert. An dem so erhaltenen Gemisch werden die Gelierzeit als Funktion der Temperatur und die thermoanalytischen Daten ermittelt.

Aus den gleichen Anteilen der Mischungskomponenten, wobei das Epoxidharz allein auf 120°C erhitzt und darin das Glutarsäure-bis-(N-cyanmethylamid) gelöst wird, werden Formstoffplatten gegossen. Um einwandfreie Formstoffe zu erzielen, wird die heisse Lösung vor dem Vergiessen von miteingerührter Luft durch Vakuumbehandlung befreit.

| | | | |
|---|---|---|---|
| Gelierzeit bei | 180°C | 2'20'' | (Minuten, Sekunden) |
| | 160°C | 6'30'' | |
| | 140°C | 14'10'' | |

| | | |
|---|---|---|
| Thermoanalyse | $T_B$ | 135°C |
| | $T_{RGmax}$ | 170°C und 258°C |
| | $T_E$ | 303°C |

Nach Härtung während 2 Stunden bei 100°C und 12 Stunden bei 120°C

| | |
|---|---|
| Schlagbiegefestigkeit nach VSM 77 105 [1] (KJ/m²) | 28,8 |
| Biegefestigkeit nach VSM 77 103 (N/mm²) | 126/117* |
| Durchbiegung nach VSM 77 103 (mm) | 8/10,8* |
| GUT | 121°C |
| Wärmeformbeständigkeit nach ISO Norm 75 [2] | 112°C |
| $H_2O$-Aufnahme nach 4 Tagen | |
| Wasserlagerung bei 23°C | 0,32% |
| $H_2O$-Aufnahme nach 1 Stunde | |
| Lagerung im Kochwasser | 0,49% |
| Zugscherfestigkeit nach DIN 53 283 [3] (N/mm²) | 14,5 |
| Dielektrischer Verlustfaktor tgδ, 1%-Wert | 80°C |
| 5%-Wert | 105°C |

| | |
|---|---|
| Dielektrizitätszahl bei 23°C | 3,5 |
| spezifischer Durchgangswiderstand bei 23°C (Ω·cm) | $1,1 \cdot 10^{17}$ |

1) VSM = Verein Schweizerischer Maschinenindustrieller
2) ISO = International Standards Organization
3) DIN = Deutsche Industrie-Norm

* 1. Wert bei maximaler Last
2. Wert beim Bruch

*Beispiel II*

100 Teile eines Epoxidharzes auf Basis von Bisphenol A mit einem Epoxidgehalt von 5,78 Äquivalenten/kg und einer Viskosität von 5000 mPa.s bei 25°C werden mit 64,2 Teilen des gemäss Beispiel 2 hergestellten Adipinsäure-bis-(N-cyan-methylamids) (Äquivalentverhältnis 1:1) und 0,24 Teilen 1-Methylimidazol als Härtungsbeschleuniger gemischt und zwecks Bestimmung der Reaktivität (Gelierzeit, Thermoanalyse) mittels eines Dreiwalzenstuhls homogenisiert.

Für die Herstellung von Formstoffplatten aus den gleichen Anteilen der Mischungskomponenten wird das Epoxidharz mit dem Härtungsbeschleuniger auf 120°C erhitzt und dann erst das Adipinsäure-bis-(N--cyan-methylamid) zugegeben. Die erhaltene klare gelbe Lösung wird danach in auf 100°C erhitzte Formen vergossen und gehärtet.

| | | |
|---|---|---|
| Gelierzeit bei | 180°C | 7' |
| | 160°C | 20'30'' |
| | 140°C | 52'30'' |
| Thermoanalyse | $T_B$ | 102°C |
| | $T_{RG_{max}}$ | 175°C |
| | $T_E$ | 217°C |

Nach Härtung während 2 Stunden bei 100°C und 12 Stunden bei 120°C

| | |
|---|---|
| Schlagbiegefestigkeit (KJ/m²) | 13 |
| Biegefestigkeit (N/mm²) | 130 |
| Durchbiegung (mm) | 6,5 |
| GUT | 122°C |
| Wärmeformbeständigkeit | 104°C |
| $H_2O$-Aufnahme nach 4 Tagen | |
| Wasserlagerung bei 23°C | 0,53% |
| Zugscherfestigkeit (N/mm²) | 13,9 |
| Dielektrischer Verlustfaktor tgδ, 1%-Wert | 60°C |
| 5%-Wert | 105°C |
| Dielektrizitätszahl bei 23°C | 3,6 |
| spezifischer Durchgangswiderstand bei 23°C (Ω·cm) | $1,0 \cdot 10^{16}$ |

*Beispiel III*

100 Teile des im Beispiel I verwendeten Epoxidharzes und 34,9 Teile des gemäss Beispiel 19 hergestellten 4,4'-Methylen-bis-(N-acetyl-phenylcyanamids) (Äquivalentverhältnis 1:1) werden in einer Schlagmühle homogenisiert. An dem so erhaltenen Gemenge wird die Reaktivität bestimmt.

Für die Herstellung von Formstoffen wird das Epoxidharz auf 120-130°C erhitzt. Bei dieser Temperatur wird das erfindungsgemässe 4,4'-Methylen-bis--(N-acetylphenylcyanamid) darin gelöst. Sobald eine klare Lösung erhalten wird, wird diese vor dem Vergiessen zu Formstoffen von miteingerührter Luft durch Vakuumbehandlung befreit.

| | | |
|---|---|---|
| Gelierzeit bei | 180°C | 4'55'' |
| | 160°C | 12' |
| | 140°C | 31' |
| Thermoanalyse | $T_b$ | 137°C |
| | $T_{RG_{max}}$ | 174°C |
| | $T_E$ | 241°C |

Nach Härtung während 12 Stunden bei 120°C

| | |
|---|---|
| Schlagbiegefestigkeit (KJ/m²) | 26 |
| Biegefestigkeit (N/mm²) | 133 |
| Durchbiegung (mm) | 8,8 |
| GUT | 110°C |
| Wärmeformbeständigkeit | 106°C |
| $H_2O$-Aufnahme nach 4 Tagen | |
| Wasserlagerung bei 23°C | 0,26% |
| $H_2O$-Aufnahme nach 1 Stunde | |
| Lagerung in Kochwasser | 0,24% |
| Zugscherfestigkeit (N/mm²) | 13,6 |
| Dielektrischer Verlustfaktor tgδ, 1%-Wert | 96°C |
| 5%-Wert | 115°C |
| Dielektrizitätszahl bei 23°C | 3,4 |
| spezifischer Durchgangswiderstand bei 23°C (Ω·cm) | $4,5 \cdot 10^{16}$ |

*Beispiel IV*

100 Teile eines bei Raumtemperatur flüssigen Epoxidharzes auf Basis von Bisphenol A mit einem Epoxidgehalt von 5,35 Äquivalenten/kg und einer Viskosität von 10 000 mPa.s bei 25°C werden mit 63,1 Teilen des gemäss Beispiel 10 hergestellten Glutarsäure-bis-(N-cyan-äthylamids), das bei Raumtemperatur ebenfalls flüssig ist, gut vermischt. An der so hergestellten klaren Lösung wird die Viskosität bei 25°C mittels der Hoeppler-Kugelfallmethode bestimmt (Anfangsviskosität). Der Viskositätsanstieg wird so lange verfolgt, bis sich die Anfangsviskosität verdoppelt hat.

| | |
|---|---|
| Anfangsviskosität bei 25°C: | 975 mPa.s |
| Verdoppelung der Anfangsviskosität bei 25°C: | >210 Tage |

**Patentansprüche**

1. N-Cyancarbonsäureamidderivate, welche die

Gruppierung 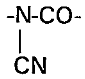 zwei- oder dreimal im Molekül enthalten, der Formeln I bis III

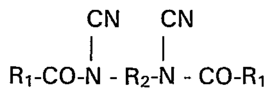 (I)

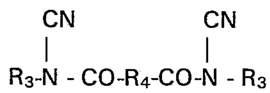 (II)

oder 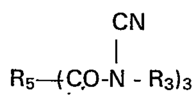 (III)

worin $R_1$ ein unsubstituiertes oder substituiertes Alkyl mit 1 bis 8 C-Atomen, Cycloalkyl mit 5 bis 8 C-Atomen oder unsubstituiertes oder substituiertes Aryl mit 6 oder 10 Ring-C-Atomen, $R_2$ ein gegebenenfalls durch O- oder S-Atome unterbrochenes Alkylen mit 2 bis 12 C-Atomen, Buten-(2)-ylen, Butin-(2)-ylen, Phenylendimethylen oder einen Rest der

Formel 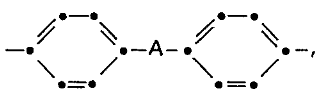, worin -A- für

$-CH_2-$, $-SO_2-$ oder -O- steht, $R_3$ ein unsubstituiertes oder substituiertes Alkyl mit 1 bis 8 C-Atomen, unsubstituiertes oder substituiertes Phenyl oder Aralkyl mit bis zu 12 C-Atomen, Cycloalkyl mit 5 bis 8 C-Atomen, Allyl oder Methallyl, $R_4$ eine direkte Bindung, ein gegebenenfalls durch O- oder S-Atome unterbrochenes Alkylen mit 1 bis 12 C-Atomen, 1,3-, 1,4-Cyclohexylen, 1,3- oder 1,4-Phenylen und $R_5$

einen Rest der Formeln 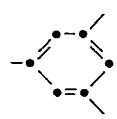 oder 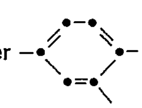

bedeuten.

2. N-Cyancarbonsäureamidderivate der Formeln I bis III gemäss Anspruch 1, dadurch gekennzeichnet, dass $R_1$ ein Alkyl mit 1 bis 4 C-Atomen, Cyclohexyl oder unsubstituiertes oder substituiertes Phenyl, $R_2$ ein Alkylen mit 2 bis 6 C-Atomen, Phenylendimethylen, oder einen Rest der Formel

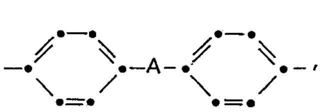, worin -A- für $-CH_2-$,

$-SO_2-$ oder -O- steht, $R_3$ ein Alkyl mit 1 bis 4 C-Atomen, unsubstituiertes oder substituiertes Benzyl oder Allyl, $R_4$ ein Alkylen mit 2 bis 8 C-Atomen, 1,3-, 1,4-Cyclohexylen, 1,3- oder 1,4-Phenylen und

$R_5$ einen Rest der Formel 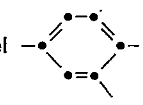 bedeuten.

3. N-Cyancarbonsäureamidderivate der Formeln I oder II gemäss Anspruch 1, dadurch gekennzeichnet, dass $R_1$ ein Alkyl mit 1 bis 4 C-Atomen, Cyclohexyl oder unsubstituiertes oder substituiertes Phenyl, $R_2$ ein Alkylen mit 2 bis 6 C-Atomen, Phenylendimethylen, oder einen Rest der Formel

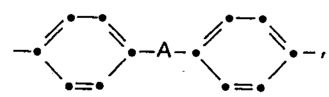, worin -A- für $-CH_2-$,

$-SO_2-$ oder -O- steht, $R_3$ ein Alkyl mit 1 bis 4 C-Atomen, unsubstituiertes oder substituiertes Benzyl oder Allyl, $R_4$ ein Alkylen mit 2 bis 8 C-Atomen, 1,3-, 1,4-Cyclohexylen, 1,3- oder 1,4-Phenylen und

$R_5$ einen Rest der Formel 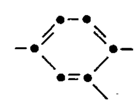 bedeuten.

4. Verfahren zur Herstellung von Cyancarbonsäureamidderivaten der Formeln I bis III gemäss Anspruch 1, dadurch gekennzeichnet, dass man

1 Mol eines Dicyandiamins der Formel IV

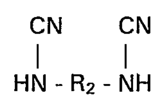 (IV)

mit 2 Mol eines Carbonsäureanhydrids der Formel (V),

$(R_1\text{-CO})_2O$ (V),

in einem organischen, mit Anhydridgruppen nicht reagierenden Lösungsmittel und gegebenenfalls in Gegenwart eines basischen Katalysators oder

1 Mol eines Dicyandiaminsalzes der Formel VI

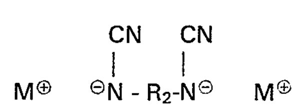 (VI)

mit 2 Mol eines Carbonsäurehalogenids der Formel VII

$R_1$-CO-X (VII)

oder 1 Mol einer Dihalogenverbindung der Formel VIII

X-$R_2$-X (VIII)

mit 2 Mol eines N-Cyancarbonsäureamidsalzes der Formel IX

CN
|
$R_1\text{-CO-}N^{\ominus}\quad M^{\oplus}$ (IX)

worin X für ein Chlor- oder Bromatom und $M^{\oplus}$ für ein Na- oder K-Kation stehen, in einem polaren aprotischen Lösungsmittel zu Verbindungen der Formel I umsetzt, oder dass man

1 Mol eines Carbonsäuredi- oder -trichlorids der Formel X bzw. XI

$Cl\text{-CO-}R_4\text{-CO-Cl}$ (X)

$R_5\text{+CO-Cl)}_3$ (XI)

mit 2 bzw. 3 Mol eines Cyanamids der Formel XII

CN
|
$R_3\text{-NH}$ (XII)

in Gegenwart von2 bzw. 3 Mol Natron- oder Kalilauge, oder

1 Mol eines Carbonsäuredicyandiamid- oder -tricyantriamidsalzes der Formel XIII bzw. XIV

CN CN
| |
$M^{\oplus}\quad {}^{\ominus}N\text{ - CO-}R_4\text{-CO-}N^{\ominus}\quad M^{\oplus}$ (XIII)

CN
|
$R_5\text{+CO-}N^{\ominus}\quad M^{\oplus})_3$ (XIV)

entweder mit 2 bzw. 3 Mol eines Alkylierungsmittels der Formel XV

$R_3\text{-Z}$ (XV)

worin $M^{\oplus}$ für ein Na- oder K-Kation und Z für ein Chlor-, Brom- oder Jodatom stehen, oder auch für den Fall, dass $R_3$ in Formel II bzw. III nur Methyl oder Äthyl bedeutet, mit 2 bzw. 3 Mol Dimethyl-, Diäthylsulfat, Alkylphosphonsäuredimethyl- oder -diäthylester als Alkylierungsmittel in einem polaren aprotischen Lösungsmittel zu Verbindungen der Formel II bzw. III umsetzt.

5. Verwendung der N-Cyancarbonsäureamidderivate der Formeln I bis III gemäss Anspruch 1 in härtbaren, ausserdem Epoxidharze und gegebenenfalls Härtungsbeschleuniger enthaltenden Mischungen.

## Claims

1. An N-cyanocarboxylic acid amide derivative which contains two or three -N-CO- groupings in the
|
CN
molecule and is of formula I, II or III

CN CN
| |
$R_1\text{-CO-N - }R_2\text{-N - CO-}R_1$ (I)

CN CN
| |
$R_3\text{-N - CO-}R_4\text{-CO-N - }R_3$ (II)

CN
|
or $R_5\text{+CO-N - }R_3)_3$ (III)

in which formulae $R_1$ is unsubstituted or substituted alkyl having 1 to 8 carbon atoms, cycloalkyl having 5 to 8 carbon atoms or unsubstituted or substituted aryl having 6 to 10 ring carbon atoms, $R_2$ is alkylene which has 2 to 12 carbon atoms and may be interrupted by O or S atoms, or is but-2-enylene, but-2-ynylene, phenylenedimethylene or a radical of the formula— 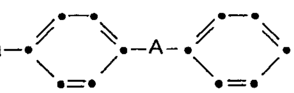 —, in which -A- is -$CH_2$-, -$SO_2$- or -O-, $R_3$ is unsubstituted or substituted alkyl having 1 to 8 carbon atoms, unsubstituted or substituted phenyl or aralkyl having not more than 12 carbon atoms, cycloalkyl having 5 to 8 carbon atoms, allyl or methallyl, $R_4$ is a direct bond, alkylene which has 1 to 12 carbon atoms and may be interrupted by O or S atoms, or is 1,3- or 1,4-cyclohexylene or 1,3- or 1,4-phenylene and $R_5$ is a radical of the formula 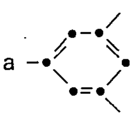 or

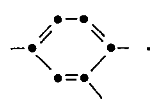 .

2. An N-cyanocarboxylic acid amide derivative of formula I, II or III according to claim 1, in which $R_1$ is alkyl having 1 to 4 carbon atoms, cyclohexyl or unsubstituted or substituted phenyl, $R_2$ is alkylene having 2 to 6 carbon atoms, phenylenedimethylene or a radical of the formula

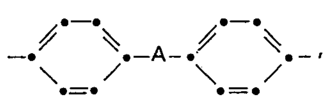 , in which -A- is -$CH_2$-, -$SO_2$- or -O-, $R_3$ is alkyl having 1 to 4 carbon atoms, unsubstituted or substituted benzyl or allyl, $R_4$ is alkylene having 2 to 8 carbon atoms, 1,3- or 1,4-cyclohexylene or 1,3- or 1,4-phenylene and $R_5$ is a radical of the formula 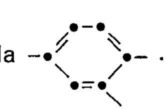 .

3. An N-cyanocarboxylic acid amide derivative of formula I or II according to claim 1, in which $R_1$ is alkyl having 1 to 4 carbon atoms, cyclohexyl or un-

substituted or substituted phenyl, $R_2$ is alkylene having 2 to 6 carbon atoms, phenylenedimethylene or a radical of the formula

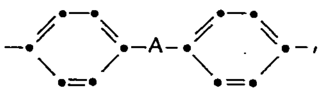, in which -A- is $-CH_2-$, $-SO_2-$ or -O-, $R_3$ is alkyl having 1 to 4 carbon atoms, unsubstituted or substituted benzyl or allyl, $R_4$ is alkylene having 2 to 8 carbon atoms, 1,3- or 1,4-cyclohexylene or 1,3- or 1,4-phenylene and $R_5$ is a radical of the formula 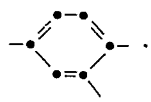 .

4. A process for the preparation of a cyanocarboxylic acid amide derivative of formula I, II or III according to claim 1, which comprises reacting 1 mole of a dicyandiamine of formula IV

CN CN
| |
HN - $R_2$ - NH (IV)

with 2 moles of a carboxylic acid anhydride of formula V

$(R_1\text{-CO})_2O$ (V)

in an organic solvent which does not react with anhydride groups and in the presence or absence of a basic catalyst, or reacting 1 mole of a dicyandiamine salt of formula VI

CN CN
| |
$M^{\oplus}$ $^{\ominus}N$ - $R_2$-$N^{\ominus}$ $M^{\oplus}$ (VI)

with 2 moles of a carboxylic acid halide of formula VII

$R_1$-CO-X (VII)

or reacting 1 mole of a dihalo compound of formula VIII

X-$R_2$-X (VIII)

with 2 moles of an N-cyanocarboxylic acid amide salt of formula IX

CN
|
$R_1$-CO-$N^{\ominus}$ $M^{\oplus}$ (IX)

in which formulae X is a chlorine or bromine atom and $M^{\oplus}$ is a Na or K cation, in a polar aprotic solvent, to give a compound of formula I, or reacting 1 mole of a carboxylic acid dichloride or trichloride of formula X or XI

Cl-CO-$R_4$-CO-Cl (X)

$R_5\text{-(CO-Cl)}_3$ (XI)

with 2 or 3 moles respectively of a cyanamide of formula XII

CN
|
$R_3$-NH (XII)

in the presence of 2 or 3 moles respectively of sodium hydroxide solution or potassium hydroxide solution, or reacting 1 mole of a carboxylic acid dicyandiamide or tricyantriamide salt of formula XIII or XIV

CN CN
| |
$M^{\oplus}$ $^{\ominus}N$ - CO-$R_4$-CO-$N^{\ominus}$ $M^{\oplus}$ (XIII)

CN
|
$R_5\text{-(CO-N}^{\ominus}$ $M^{\oplus})_3$ (XIV)

with either 2 or 3 moles respectively of an alkylating agent of formula XV

$R_3$-Z (XV)

in which formulae $M^{\oplus}$ is an Na or K cation and Z is a chlorine, bromine or iodine atom, or, if $R_3$ in formula II or III is methyl or ethyl, with 2 or 3 moles respectively of dimethyl sulfate, diethyl sulfate, a dimethyl alkylphosphonate or a diethyl alkylphosphonate, as an alkylating agent, in a polar aprotic solvent, to give a compound of formula II or III respectively.

5. Use of a N-cyanocarboxylic acid amide derivative of formula I, II or III in curable mixtures which also contain epoxy resins and may contain hardening accelerators.

**Revendications**

1. N-Cyano-carboxamides dont la molécule a deux ou trois radicaux -N(CN)-CO-, qui répondent à l'une des formules I à III:

CN CN
| |
$R_1$-CO-N - $R_2$-N - CO-$R_1$ (I)

CN CN
| |
$R_3$-N - CO-$R_4$-CO-N - $R_3$ (II)

CN
|
$R_5\text{-(CO-N - R}_3)_3$ (III)

dans lesquelles

$R_1$ représente un alkyle, substitué ou non, qui contient de 1 à 8 atomes de carbone, un cycloalkyle contenant de 5 à 8 atomes de carbone ou un aryle, substitué ou non, dont le cycle contient 6 ou 10 atomes de carbone,

$R_2$ représente un alkylène contenant de 2 à 12 atomes de carbone, éventuellement interrompu par des atomes O ou S, un butène-2 ylène, un butyne-2 ylène, un phénylène-diméthylène ou un radical

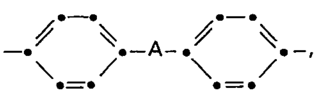 , dans lequel -A- désigne

$-CH_2-$, $-SO_2-$ ou -O-,

$R_3$ représente un alkyle, substitué ou non, qui contient de 1 à 8 atomes de carbone, un radical phényle ou aralkyle, substitué ou non, qui contient au plus 10 atomes de carbone, un cycloalkyle contenant de 5 à 10 atomes de carbone, un allyle ou un méthallyle,

$R_4$ représente une liaison directe, un alkylène qui contient de 1 à 12 atomes de carbone et qui est éventuellement interrompu par des atomes O ou S, un cyclohexylène-1,3, un cyclohexylène-1,4, un phénylène-1,3 ou un phénylène-1,4, et

$R_5$ représente un radical de formule 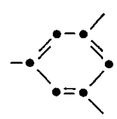

ou de formule 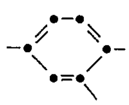 .

2. N-Cyano-carboxamides de formule I à III selon la revendication 1, caractérisés en ce que $R_1$ représente un alkyle contenant de 1 à 4 atomes de carbone, un cyclohexyle ou un phényle substitué ou non, $R_2$ représente un alkylène contenant de 2 à 6 atomes de carbone, un phénylène-diméthylène ou un radical 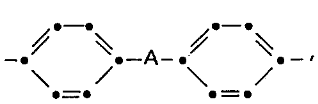 , dans lequel -A- représente $-CH_2-$, $SO_2$- ou -O-, $R_3$ représente un alkyle contenant de 1 à 4 atomes de carbone, un benzyle substitué ou non ou un allyle, $R_4$ représente un alkylène contenant de 2 à 8 atomes de carbone, un cyclohexylène-1,3 ou -1,4, ou un phénylène-1,3 ou -1,4 et $R_3$ représente un radical de formule

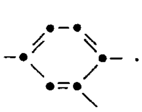 .

3. N-Cyano-carboxamides de formule I ou II selon la revendication 1, caractérisés en ce que $R_1$ représente un alkyle contenant de 1 à 4 atomes de carbone, un cyclohexyle ou un phényle substitué ou non, $R_2$ un alkylène contenant de 2 à 6 atomes de carbone, un phénylène-diméthylène ou un radical

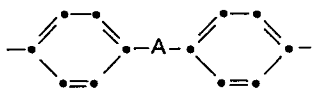 , dans lequel -A- désigne

$-CH_2-$, $-SO_2-$ ou -O-, $R_3$ représente un alkyle contenant de 1 à 4 atomes de carbone, un benzyle substitué ou non ou un allyle, $R_4$ représente un alkylène contenant de 2 à 8 atomes de carbone, un cyclohexylène-1,3 ou -1,4 ou un phénylène-1,3 ou -1,4, et

$R_5$ représente un radical 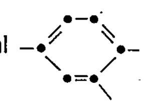 .

4. Procédé pour préparer des cyano-carboxamides de formules I à III selon la revendication 1, procédé caractérisé en ce qu'on fait réagir:

1 mol d'une dicyanodiamine de formule IV

```
CN      CN
|       |
HN - R2 - NH          (IV)
```

avec 2 mol d'un anhydride d'acide carboxylique de formule V:

$$(R_1\text{-}CO)_2O \qquad (V),$$

dans un solvent organique ne réagissant pas avec les radicaux d'anhydride et éventuellement en présence d'un catalyseur basique, ou

1 mol d'un sel de dicyanodiamide de formule VI:

```
          CN    CN
          |     |
M⊕    ⊖N - R2-N⊖    M⊕          (VI)
```

avec 2 mol d'un halogénure d'acide carboxylique de formule VII:

$$R_1\text{-}CO\text{-}X \qquad (VII),$$

ou

1 mol d'un composé dihalogéné de formule VIII:

$$X\text{-}R_2\text{-}X \qquad (VIII)$$

avec 2 mol d'un sel de N-cyano-carboxamide de formule IX:

```
        CN
        |
R1-CO-N⊖    M⊕          (IX),
```

formules dans lesquelles X représente un atome de chlore ou de brome et $M^{\oplus}$ désigne un cation de sodium ou de potassium, dans un solvant aprotique polaire, de manière à obtenir des composés de formule I,

ou on fait réagir:

1 mol d'un dichlorure ou trichlorure d'acide carboxylique de formule X ou XI:

$$Cl\text{-}CO\text{-}R_4\text{-}CO\text{-}Cl \qquad (X)$$

$$R_5\text{-}(CO\text{-}Cl)_3 \qquad (XI)$$

avec 2 ou 3 mol d'un cyanamide de formule XII:

CN
|
$R_3$-NH (XII)

en présence de 2 ou 3 mol d'hydroxyde de sodium ou d'hydroxyde de potassium,
ou

1 Mol d'un sel de bis-(cyano-carboxamide) ou de tris-(cyano-carboxamide) de formule XIII ou XIV:

CN CN
| |
$M^{\oplus}$ $^{\ominus}N$ - $CO\text{-}R_4\text{-}CO\text{-}N^{\ominus}$ $M^{\oplus}$ (XIII)

CN
|
$R_5\text{-}(CO\text{-}N^{\ominus}$ $M^{\oplus})_3$ (XIV)

soit avec 2 ou 3 mol d'un agent d'alkylation répondant à la formule XV:

$$R_3\text{-}Z \qquad (XV),$$

dans laquelle $M^{\oplus}$ représente un cation Na ou K et Z représente un atome de chlore, de brome ou d'iode, soit, dans le cas où $R_3$, dans la formule II ou III, ne représente qu'un méthyle ou un éthyle, avec 2 ou 3 mol d'un sulfate de diméthyle ou de diéthyle ou d'un alcane-phosphonate de diéthyle ou de diméthyle en tant qu'agent d'alkylation, dans un solvant aprotique polaire, de manière à obtenir des composés de formule II ou III.

5. Application des N-cyano-carboxamides de formule I à III selon la revendication dans des mélanges durcissables de résines époxydiques contenant éventuellement des accélérateurs de durcissement.